Europäisches Patentamt

European Patent Office

Office européen des brevets

(11) Veröffentlichungsnummer: **0 465 892 A1**

# EUROPÄISCHE PATENTANMELDUNG

(21) Anmeldenummer: **91110217.6**

(51) Int. Cl.5: **F16L 55/16**

(22) Anmeldetag: **21.06.91**

(30) Priorität: **11.07.90 DE 4022103**

(43) Veröffentlichungstag der Anmeldung:
**15.01.92 Patentblatt 92/03**

(84) Benannte Vertragsstaaten:
**AT BE CH DE ES FR GB IT LI LU NL SE**

(71) Anmelder: **HERMANN HEMSCHEIDT MASCHINENFABRIK GMBH & CO.**
Bornberg 97-103 Postfach 100269
**W-5600 Wuppertal 1(DE)**

(72) Erfinder: **Behnert, Holger**
Schwartnerstrasse 1c
**W-5600 Wuppertal 2(DE)**
Erfinder: **Heinz, Norbert, Dipl.-Ing.**
Königstrasse 118
**W-5630 Remscheid(DE)**

(54) **Verfahren zum Abdichten einer in eine Kanalrohrleitung einmündenden Zulaufleitung und Vorrichtung zur Durchführung des Verfahrens.**

(57) Das Verfahren zum Abdichten der Mündung einer seitlich in eine Kanalrohrleitung (1) einmündenden Zulaufleitung (3) verwendet ein Anschlußstück (4) mit einem dehnbaren Faservlies, das sich von einem Dehnkörper (15) in die Zulaufleitung (3) drücken läßt. Das Anschlußstück (4) wird auf dem Dehnkörper (15) mit einem Schlitten (5) in die Kanalrohrleitung (1) eingefahren. Eine mitgeführte Fernsehkamera (9) wird achsgleich mit der abzudichtenden Mündung der Zulaufleitung (3) in Stellung gebracht. Das Anschlußstück (4) wird radial ausgerichtet und zu der Zulaufleitung (3) hin verschoben. Anschließend wird das Anschlußstück (4) mit Hilfe von einem Druckschild (13) deckungsgleich mit der Mündung am Rand der Mündung zur Anlage gebracht und in die Zulaufleitung (2) gedrückt.

Fig. 4

Fig. 5

Die vorliegende Erfindung betrifft ein Verfahren zum Abdichten der Mündung einer seitlich in eine Kanalrohrleitung einmündenden Zulaufleitung, bei dem zum Herstellen der abdichtenden Verbindung ein Anschlußstück verwendet wird, das am Rande einer vorgefertigten Anschlußöffnung ein dehnbares Faserflies aufweist, das mit einem aushärtbaren Harz getränkt ist und das sich unter der Kontrolle einer Fernsehkamera mit einem Dehnkörper, auf den das Anschlußstück mit der Anschlußöffnung mittig aufgelegt wird, in die Zulaufleitung drücken läßt, so daß es den Übergangsbereich der Mündung überdeckt und abdichtet und bei dem der Dehnkörper auf einem Schlitten in die Kanalrohrleitung eingezogen wird sowie Vorrichtungen zur Durchführung des Verfahrens. In nichtbegehbaren Kanalrohrleitungen sind die Anschlußstellen der seitlich einmündenden Zulaufleitungen häufig die Ursache für Undichtigkeiten, durch die Abwasser in die Umgebung austreten oder Grundwasser in die Kanalrohrleitung eintreten kann. Das Abdichtungsproblem stellt sich in besonderer Weise beim Abdichten von Kanalrohrleitungen, bei denen die Zulaufleitungen mit einem nachträglich eingebrachten Inliner zu verbinden sind. Vor dem Abdichten der Verbindungen werden hierbei die Anschlußöffnungen im Rohrstrang des Inliners auf die Mündungen der Zulaufleitungen ausgerichtet oder mit Hilfe geeigneter Fräs- oder Schneidvorrichtungen an Ort und Stelle passend hergestellt.

Aus der europäischen Patentanmeldung 0 335 223 A1 ist es bekannt, den Inliner einer nichtbegehbaren Kanalrohrleitung und eine Zulaufleitung mit einem Anschlußstück zu verbinden, das aus einem Faserflies besteht, das am Rand einer vorgefertigten Anschlußöffnung befestigt und mit einem aushärtbaren Harz getränkt ist. Das Faserflies läßt sich von einem Dehnkörper in die Zulaufleitung drücken, so daß es den Übergangsbereich zwischen der Anschlußöffnung und der Zulaufleitung überdeckt und abdichtet. Dazu wird das Anschlußstück auf dem Dehnkörper mit einem Schlitten in die Kanalrohrleitung eingefahren. Seitlich von der Mündungsstelle wird eine Fernsehkamera in Position gebracht, um den Setzvorgang am Bildschirm von einer übertage befindlichen Leitstelle aus beobachten und steuern zu können. Aufgrund der engen Raumverhältnisse in einer nichtbegehbaren Kanalrohrleitung ergibt sich jedoch eine sehr ungünstige Perspektive, aus der eine realistische Einschätzung der Abstandsverhältnisse und somit eine genaue Führung des einzubringenden Anschlußstückes nicht gut möglich ist. Erschwerend kommt hinzu, daß sich der Dehnkörper während des Setzvorgangs vor die Fernsehkamera schiebt und die abzudichtende Mündung auf dem Fernsehbild verdeckt. Mangels einer gezielten Führung ist es kaum möglich, das Anschlußstück deckungsgleich mit der Mündung in Stellung zu bringen, so daß es passend gesetzt werden kann. Eine Verbindung kommt dann gar nicht zustande oder die Abdichtung mißlingt.

Es ist daher die Aufgabe der vorliegenden Erfindung, bei einem Verfahren der eingangs genannten Art das Anschlußstück in eine zur Mündung der Zulaufleitung genau passend ausgerichtete Stellung zu bringen, um damit die Voraussetzung für eine dichtschließende Verbindung zu schaffen.

Dieses Problem wird mit den im Hauptanspruch angegebenen Maßnahmen gelöst. Die Unteransprüche betreffen geeignete Vorrichtungen zur Durchführung des Verfahrens sowie deren zweckmäßige Ausgestaltung.

Die Erfindung wird wie folgt ausgeführt:
Zuerst wird die Lage der Mündung in der Kanalrohrleitung mit dem Objektiv der Fernsehkamera genau eingemessen, dann wird das Anschlußstück um einen konstruktiv vorgegebenen Festbetrag in Längsrichtung der Kanalrohrleitung auf die Zulaufleitung hin verschoben. Das auf dem Dehnkörper mitgeführte Anschlußstück ist daraufhin in axialer Richtung ausgerichtet. Zum Ausrichten in radialer Richtung auf den Einlaufwinkel der Zulaufleitung hin werden das Anschlußstück und die Fernsehkamera zusammen mit der Drehachse gedreht, wobei dieser Vorgang entweder vor oder nach der Längenverstellung ausgeführt werden kann.

In engen Kanalrohrquerschnitten erfolgt die Ausrichtung auf den Einlaufwinkel vor der Längenverstellung, indem das Anschlußstück bereits beim Einmessen zusammen mit der Fernsehkamera gedreht und dabei im vorgegebenen Seitenabstand parallel zur Achse der Zulaufleitung ausgerichtet wird. Nach der Längenverstellung befindet sich das Anschlußstück genau deckungsgleich an der Mündung der Zulaufleitung.

In großen Kanalquerschnitten kann die Verwendung einer mit einem schwenkbaren Objektiv versehenen Fernsehkamera vorteilhaft sein, die an einem Ende des Schlittens aufgebaut ist. Die Fernsehkamera wird bei Längeneinmessen nicht mit der Drehachse des Schlittens sondern nur mit Hilfe des Schwenkkopfes in Stellung gebracht. Nach der Längeneinstellung wird die Kamera so eingestellt, daß die Mündung der Zulaufleitung beobachtet werden kann. Erst dann werden Kamera und Dehnkörper zusammen mit der Drehachse zur Mündung hin in radialer Richtung ausgerichtet. Der sich anschließende Setzvorgang des Anschlußstückes mit dem Dehnkörper kann bei dieser Einstellung über die Fernsehkamera beobachtet werden.

Die Erfindung verringert den Arbeits- und Zeitaufwand beim Herstellen der Abdichtung von Zulaufleitungen im Bereich ihrer Einmündungen in eine Kanalrohrleitung oder in einen darin eingezogenen Inliner-Leitungsstrang. Das zu setzende Anschlußstück wird deckungsgleich mit der Mündung der Zulaufleitung ausgerichtet, wodurch eine Voraussetzung für eine saubere Abdichtung geschaffen wird. Die hergestellte Verbindung ist dauerhaft, weil das Anschlußstück unter Andruck gesetzt wird und aushärten kann. Die einzelnen Verfahrensschritte lassen sich ohne Schwierigkeiten ferngesteuert ausführen.

In der Zeichnung sind Ausführungsbeispiele der Erfindung dargestellt. Es zeigen:

Fig. 1 eine in die Kanalrohrleitung eingefahrene Vorrichtung zum Herstellen der Abdichtung der seitlich einmündenden Zulaufleitung in Seitenansicht;

Fig. 2 einen Querschnitt entsprechend der Schnittlinie A-A von Fig. 1;

Fig. 3 die im Inliner verspannte Vorrichtung nach Fig. 1 in vergrößertem Maßstab nach dem Setzen des Anschlußstükkes;

Fig. 4 ein weiteres Ausführungsbeispiel einer Vorrichtung zur Durchführung des Verfahrens in Seitenansicht in kleinerem Maßstab;

Fig. 5 die Vorrichtung entsprechend 4 in veränderter Position.

Die nur ausschnittsweise dargestellte Kanalrohrleitung 1 ist im Erdreich zwischen zwei zutage führenden, nicht dargestellten Einstiegsschächten verlegt und mit einem eingezogenen Inliner 2 ausgekleidet. Zum Anschluß des Inliners 2 an eine seitlich in die Kanalrohrleitung 1 einmündende Zulaufleitung 3 ist eine auf deren Mündung ausgerichtete Öffnung in dem Inliner-Rohrstrang 2 vorhanden. Die Verbindung des Inliners 2 mit der Zulaufleitung 3 erfolgt mit einem Anschlußstück 4, 26, das den Randbereich um die Mündung herum abdeckt und eine vorgefertigte Anschlußöffnung aufweist. Am Rand der Anschlußöffnung ist ein dehnbares, mit einem aushärtbaren Harz getränktes Faservlies befestigt, das die Anschlußöffnung überdeckt und sich mit einem Dehnkörper 15, 24 in die Zulaufleitung 3 hineindrücken läßt.

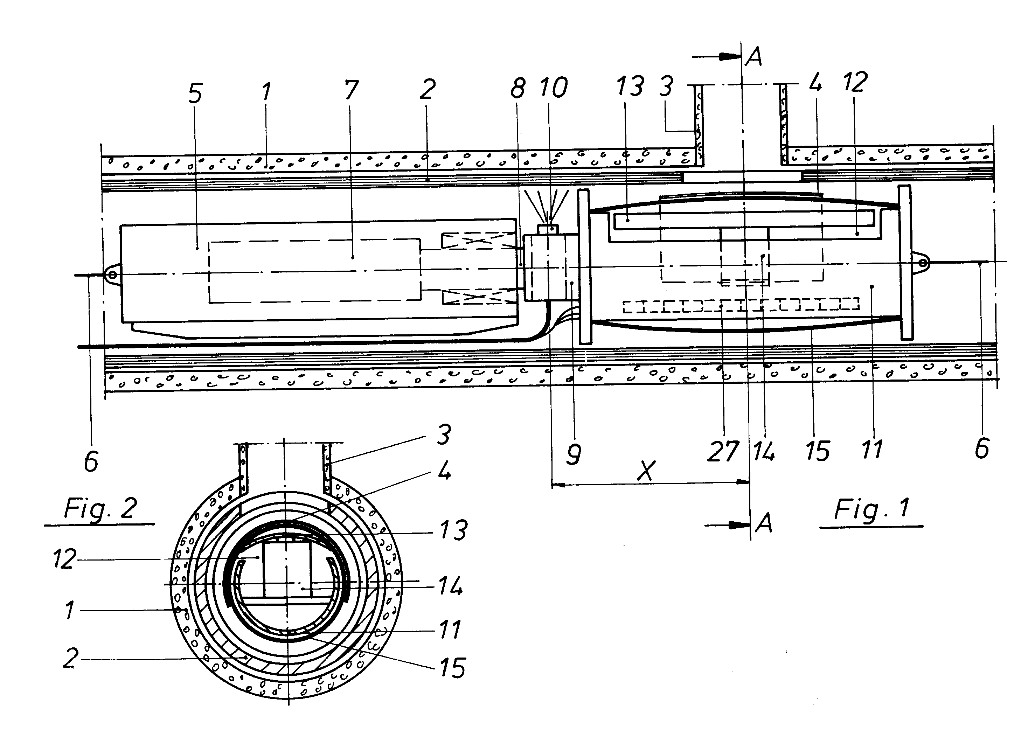

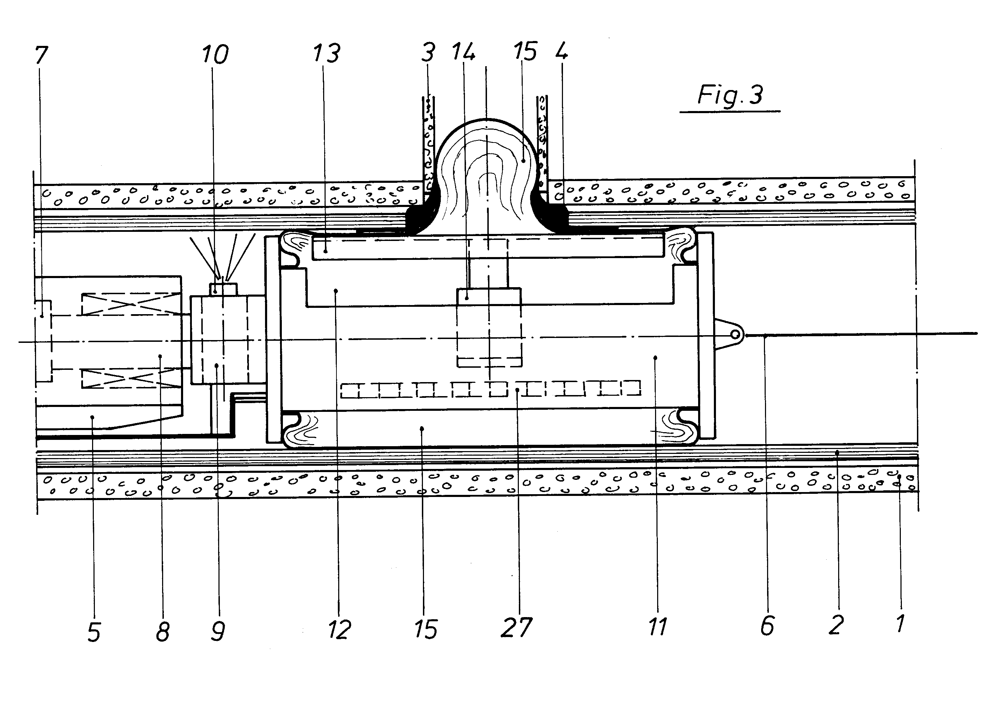

Die in der Fig. 1 bis 3 dargestellte Vorrichtung zur Herstellung der Abdichtung wird mit einem auf der Innenwandung des Inliners 2 gleitenden Schlitten 5 in Längsrichtung der Kanalrohrleitung 1 verfahren. Der Schlitten 5 wird an beidseitig angeschlagenen Zugseilen 6 von nicht dargestellten Seilwinden gezogen.

Auf dem Schlitten 5 ist ein elektrisch angetriebener Stellmotor 7 angeordnet, dessen in axiale Richtung auskragende Drehachse 8 nochmals auf dem Schlitten 5 abgestützt ist. Die Drehachse 8 trägt eine Fernsehkamera 9 mit einem radial gerichteten Objektiv 10 sowie eine Trommel 11 mit einem an beiden Enden verschlossenen zylinderförmigen Trommelkörper. In der zylindrischen Mantelfläche der Trommel 11 befindet sich eine Ausnehmung 12, in die ein Druckschild 13 mit einer dem Randbereich der Mündungsöffnung der Zulaufleitung 3 angepaßten Wölbung eingesetzt ist. Der Druckschild 13 ist kreisringförmig ausgebildet und überdeckt den Randbereich der Mündungsöffnung mit seitlichem Überstand. Der Druckschild 13 ist auf einem längenverstellbaren Teleskopzylinder 14 gelagert, der in der Trommel 11 abgestützt und mit einem vorgegebenen Abstand x vom Objektiv 10 der Fernsehkamera 9 dazu gleichgerichtet innerhalb der Trommel 11 angeordnet ist. Über die Mantelfläche der Trommel 11 ist ein schlauchförmiger Dehnkörper 15 aus einem hochelastischen Material gespannt, der mit einem von außen zugeführten Druckmittel, z.B. Druckluft, aufgebläht werden kann. Der Dehnkörper 15 überdeckt die Mantelfläche der Trommel 11 vollständig. In der Trommel 11 befindet sich weiterhin eine Heizung 27, die den Innenraum der Trommel 11 nach dem Setzen des Anschlußstückes 4 erhitzt,und den Aushärtevorgang beschleunigt.

Zum Abdichten der Mündung der Zulaufleitung 3 wird das Anschlußstück 4 im benachbarten Kanalschacht auf den Dehnkörper 15 aufgelegt, so daß sich die vorgefertigte Anschlußöffnung mittig über dem am Druckschild 13 angreifenden Teleskopzylinder 14 befindet. Das Anschlußstück 4 kann ellipsenförmige oder rechteckförmige Konturen aufweisen und den Dehnkörper 15 bis in die untere Hälfte überdecken.

Der Schlitten 5 wird bis an die abzudichtende Zulaufleitung 3 herangefahren, wobei die jeweilige Stellung des Schlittens 5 in der Kanalrohrleitung 1 bzw. dem Inliner-Rohrstrang 2 an einem nicht dargestellten Zählwerk abgegeben wird, über das das Zugseil 6 geführt ist. Im Mündungsbereich der Zulaufleitung 3 wird das Objektiv 10 der Fernsehkamera 9 sowohl in axialer als auch in radialer Richtung genau auf die Mündung der Zulaufleitung 3 ausgerichtet, indem das Objektiv 10 der Fernsehkamera 9 zentrisch unter die Mündung gefahren wird. Die axiale Ausrichtung erfolgt mit dem Zugseil 6 und die radiale Ausrichtung mit dem Stellmotor 7, der die Fernsehkamera 9 und die Trommel 11 um die Drehachse 8 verschwenkt. Das Anschlußstück 4 liegt dann mit der Anschlußöffnung parallel zur Achse der Zulaufleitung 3. Der Ausrichtvorgang läßt sich von übertage aus am Bildschirm verfolgen und steuern, weil das Objektiv 10 der Fernsehkamera 9 ein völlig freies Blickfeld erfaßt. Danach wird der Schlitten 5 um das Maß x, das durch den Abstand zwischen dem Objektiv 10 der Fernsehkamera 9 und der Mitte der Anschlußöffnung im Anschlußstück 4, bzw. dem Teleskopzylinder 14 in der Mitte vom Druckschild 13, in Längsrichtung der Kanalrohrleitung 1 auf die Zulaufleitung 3 hin verschoben. Die Anschlußöffnung im Anschlußstück 4 ist dann deckungsgleich mit der Mündung der Zulaufleitung 3 ausgerichtet.

Die abdichtende Verbindung wird hergestellt, indem der Teleskopzylinder 14 ausgefahren wird, wobei das auf dem Druckschild 13 aufliegende Anschlußstück 4 angehoben und gegen den Rand der Mündungsöffnung der Zulaufleitung 3 gedrückt wird. Der Dehnkörper 15 wird mit einem Druckmittel aufgebläht, so daß er sich an der Innenwandung des Inliners 2 verspannt. Dabei wird das Faservlies des am Rande der Anschlußöffnung vom Druckschild 13 gehaltenen Anschlußstückes 4 von dem sich in die Mündung der Zulaufleitung 2 ausdehnenden Dehnkörper 15 in die Mündungsöffnung hineingepreßt, wo es sich gegen die Rohrwandung anlegt, so daß es den Übergangsbereich der Mündung überdeckt und abdichtet.

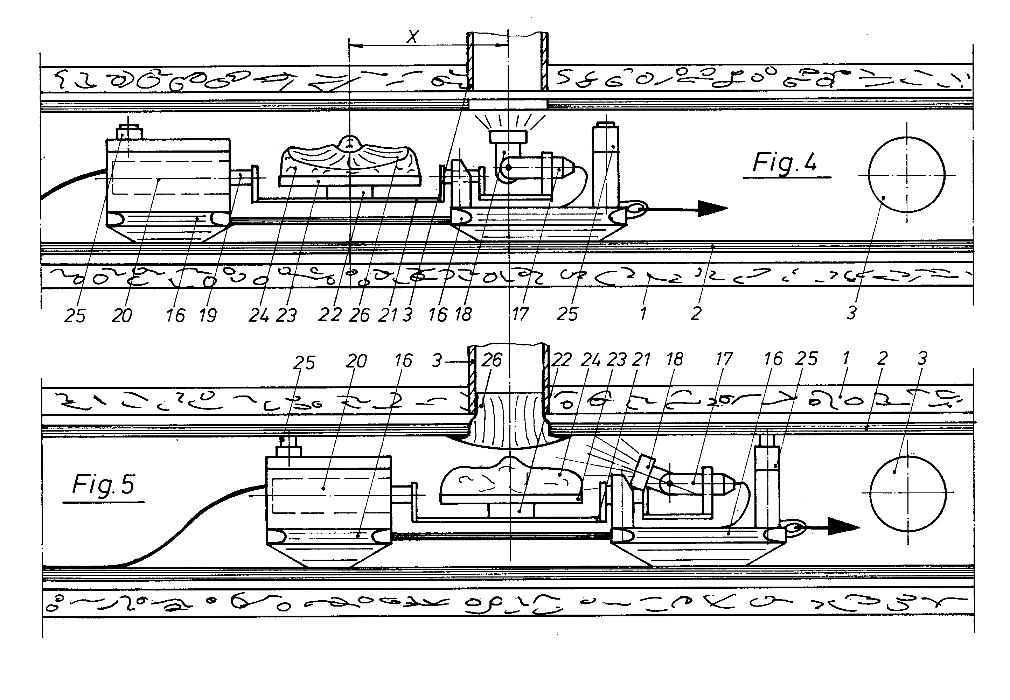

Die in Fig. 4 und 5 dargestellte Vorrichtung eignet sich für größere Querschnitte in nichtbegehbaren Kanalrohrleitungen 1. Der in den Inliner 2 eingezogene Schlitten 16 ist länger ausgebildet und trägt an einem Ende eine Fernsehkamera 17, deren Objektiv in der Zeichnung nicht sichtbar in einem fernsteuerbaren Schwenkkopf 18 untergebracht ist. Dieser Schwenkkopf 18 ist sowohl um eine axial gerichtete Drehachse als auch um eine radial gerichtete Schwenkachse (beide Achsen sind nicht dargestellt und bezeichnet) mit der Fernsehkamera 17 verbunden.

Die an beiden Enden gelagerte Drehachse 19 des Stellmotors 20 ist in der Mitte des Schlittens 16 abgesetzt und bildet einen Träger 21, für einen darauf mit einem Teleskopzylinder 22 abgestützten, topfförmigen Druckbehälter 23, in dem sich der nicht sichtbare Druckschild befindet, über den der Dehnkörper 24 aufgezogen ist. Während des Setzvorgangs wird der Schlitten 16 mit beidendig angeordneten Spannzylindern 25 in dem Inliner 2 verspannt. In der Mitte des Dehnkörpers 24 ist ein hutförmig ausgebildetes Anschlußstück 26 aufgelegt.

In Fig. 4 ist der Schlitten 16 mit dem Objektiv der Fernsehkamera 17 vor die Mündung einer vertikal in den Inliner 2 einmündenden Zulaufleitung 3 gefahren. Die Zulaufleitung 3 kann in beliebiger Richtung, also auch - wie weiter rechts dargestellt - horizontal einmünden. Die Lage der Mündung in der Kanalrohrleitung 1 wird wieder mit der Fernsehkamera 17 eingemessen, wozu der Schwenkkopf 18 in die betreffende Richtung geschwenkt wird. Danach wird der Schlitten 16 um das Maß X, das durch den Abstand zwischen der Schwenkachse des Schwenkkopfes 18 und der Mitte des Dehnkörpers 24 und somit des Anschlußstückes 26 vorgegeben ist, nach rechts verfahren, so daß sich - wie in Fig. 5 dargestellt - der Dehnkörper 24 genau unterhalb der Mündung der Zulaufleitung 3 befindet. Der Schwenkkopf 18 der Fernsehkamera 17 wird jetzt auf die Mündung gerichtet, um das Setzen des Anschlußstückes 26 beobachten zu können. Nun werden das Anschlußstück 26 auf dem Dehnkörper 24 und die Fernsehkamera 17 mit der Drehachse 19 des Stellmotors 20 in die axiale Einlaufrichtung der Zulaufleitung 4 gedreht und ausgerichtet. Danach wird das Anschlußstück 26 mit dem Teleskopzylinder 22 angehoben und mit dem Dehnkörper 24 in die Mündung der Zulaufleitung 3 gedrückt. Fig. 5 zeigt die Vorrichtung nach der Beendigung des Setzvorgangs.

**Patentansprüche**

1. Verfahren zum Abdichten der Mündung einer seitlich in eine Kanalrohrleitung einmündenden Zulaufleitung, bei dem zum Herstellen der abdichtenden Verbindung ein Anschlußstück verwendet wird, das am Rande einer vorgefertigten Anschlußöffnung ein dehnbares Faservlies aufweist, das mit einem aushärtbaren Harz getränkt ist und das sich unter der Kontrolle einer Fernsehkamera mit einem Dehnkörper, auf den das Anschlußstück mit der Anschlußöffnung mittig aufgelegt wird, in die Zulaufleitung drükken läßt, so daß es den Übergangsbereich der Mündung überdeckt und abdichtet, und bei dem der Dehnkörper auf einem Schlitten in die Kanalrohrleitung eingezogen wird, gekennzeichnet durch folgende Merkmale:

   a) das Objektiv (10) einer schwenkbar auf dem Schlitten (5, 16) gelagerten Fernsehkamera (9, 17) wird achsgleich mit der abzudichtenden Mündung der Zulaufleitung (2) in Stellung gebracht;

   b) der Dehnkörper (15, 24) wird in Verbindung mit der Fernsehkamera (9, 17) auf den Schlitten (5, 16) gedreht und parallel zur Achse der Zulaufleitungen (2) in radialer Richtung der Kanalrohrleitung (1) ausgerichtet;

   c) das Anschlußstück (4, 26) wird mit dem Schlitten (5, 16) um das Maß, das durch den Abstand (X) zwischen dem Objektiv (10) der Fernsehkamera (9, 17) und Mitte Anschlußöffnung im Anschlußstück (4, 26) vorgegeben ist, in Längsrichtung der Kanalrohrleitung (1) auf die Zulaufleitung (2) verschoben, so daß das Anschlußstück (4, 26) mit der Anschlußöffnung deckungsgleich mit der Mündung der Zulaufleitung (2) ausgerichtet ist;

   d) das Anschlußstück (4, 26) wird mit einem gewölbten Druckschild (13) gegen den Randbereich der Mündungsöffnung gedrückt und am Rande der Anschlußöffnung während des Eindrück- und Aushärtevorgangs gehalten.

2. Vorrichtung zur Durchführung des Verfahrens nach Anspruch 1, dadurch gekennzeichnet, daß die Fernsehkamera (9, 17) und der Dehnkörper (15, 24) in Verbindung mit einem Stellmotor (7, 20) auf einer Drehachse (8, 19) um die Längsachse der Kanalrohrleitung (1) schwenkbar auf dem Schlitten (5, 16) im vorgegebenen Abstand (X) voneinander angeordnet sind.

3. Vorrichtung nach Anspruch 2, dadurch gekennzeichnet, daß der Druckschild (13) des Dehnkörpers (15, 24) eine dem Randbereich der Mündungsöffnung angepaßte Wölbung aufweist und diesen mit seitlichem Abstand überdeckt.

4. Vorrichtung nach den Ansprüchen 2 oder 3, dadurch gekennzeichnet, daß der Dehnkörper (15) auf die Mantelfläche einer zylinderförmigen Trommel (11) aufgezogen ist, wobei der Druckschild (13) im Bereich einer Ausnehmung (12) angeordnet und von einem in der Trommel (11) abgestützten, mittig daran angreifenden Teleskopzylinder (14) in radialer Richtung verstellbar ist.

5. Vorrichtung nach einem der Ansprüche 2 bis 4, dadurch gekennzeichnet, daß die Trommel (11) freitragend an der Drehachse (8) befestigt und die Fernsehkamera (9) zwischen Stellmotor (7) und Trommel (11) angeordnet ist.

6. Vorrichtung nach einem der Ansprüche 2 bis 5, dadurch gekennzeichnet, daß das Objektiv der Fernsehkamera (9) und der Teleskopzylinder (14) gleichgerichtet und im vorgegebenen Abstand (X) voneinander angeordnet sind.

7. Vorrichtung nach Anspruch 2 oder 3, dadurch gekennzeichnet, daß der Dehnkörper (24) auf einem topfförmigen Druckbehälter (23) aufgezogen ist, der zwischen dem Stellmotor (20) und der Fernsehkamera (17) mit einem mittig angreifenden Teleskopzylinder (22) auf einem Träger (21) der an beiden Enden auf dem Schlitten (16) gelagerter Drehachse (19 abgestützt ist.

8. Vorrichtung nach Anspruch 7, dadurch gekennzeichnet, daß das Objektiv der Fernsehkamera (17) in einem Schwenkkopf (18) untergebracht ist, von dessen Schwenkachse aus bis Mitte Anschlußstück (26) der Abstand (X) gemessen wird.

Fig. 2

Fig. 1

EP 0 465 892 A1

*Fig.3*

EP 0 465 892 A1

EP 0 465 892 A1

Fig.4

Fig.5

8

**Europäisches Patentamt**

# EUROPÄISCHER RECHERCHENBERICHT

Nummer der Anmeldung

## EP 91 11 0217

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 253 588 (TRACEY ET AL.)<br>* Spalte 6, Zeile 42 - Spalte 7, Zeile 12; Ansprüche 12, 14, 30, 35; Figuren 2, 4, 7, 8 *<br>– – – | 1,2,5-8 | F 16 L 55/16 |
| A | WO-A-8 605 569 (BRICKHOUSE DUDLEY)<br>* Seite 10, Zeile 27 - Seite 11, Zeile 15; Figur 1 *<br>– – – | 1 | |
| D,A | EP-A-0 335 223 (HEMSCHEIDT)<br>* Zusammenfassung; Figur 1 *<br>– – – | 1 | |
| A | GB-A-2 147 966 (YARNELL)<br>– – – | | |
| A | EP-A-0 310 679 (ASHIMORI)<br>– – – – – | | |

**RECHERCHIERTE SACHGEBIETE (Int. Cl.5)**

F 16 L
E 03 F

Der vorliegende Recherchenbericht wurde für alle Patentansprüche erstellt

| Recherchenort | Abschlußdatum der Recherche | Prüfer |
|---|---|---|
| Berlin | 17 September 91 | SCHAEFFLER C.A.A. |